# EUROPEAN PATENT SPECIFICATION

(11) **EP 3 270 482 B1**
(45) Date of publication and mention of the grant of the patent: **27.11.2019**
(21) Application number: 15885326.7
(22) Date of filing: 08.10.2015
(51) Int. Cl.: H02J 7/00, B60M 3/06, H02J 7/10, B60L 9/08, B60L 9/04

(54) **STORAGE BATTERY DEVICE**
SPEICHERBATTERIEVORRICHTUNG
DISPOSITIF DE PILE RECHARGEABLE

(30) Priority: 13.03.2015 JP 2015051243
(43) Date of publication of application: 17.01.2018
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: NOGI, Masayuki, Tokyo 105-8001 (JP); MAKI, Koji, Tokyo 105-8001 (JP); SATAKE, Nobuhiko, Tokyo 105-8001 (JP)
(74) Representative: AWA Sweden AB
(86) International application number: PCT/JP2015/005119
(87) International publication number: WO 2016/147228

(56) References cited:
- EP-A1- 2 700 534
- EP-A2- 1 772 939
- JP-A- 2001 260 718
- JP-A- 2003 220 859
- JP-A- 2013 001 338
- JP-A- 2013 248 930
- JP-A- 2013 248 930

## Description

### FIELD

Embodiments of the present invention relates to a power storage device.

### BACKGROUND

A DC feeding system being an electric power supply system of a DC electric railroad is said to have wide load variation and large voltage variation of an overhead line. Recently, a regenerative car, which returns generated power (regenerative power) to a feeding side by a motor functioning as a power generator when a moving car is decelerated (braked), is increasingly introduced also into the DC electric railroad.

The regenerative power returned to the feeding side requires a load which absorbs (uses) the regenerative power such as an accelerating car existing in its surroundings. In the case where such a load does not exist, the regenerative car results in a regenerative invalidation.

On the other hand, the DC feeding system creates a DC power source from an AC electric power system using a diode rectifier, and therefore a regenerative inverter needs to be installed in order to return the regenerative power to the AC electric power system.

Besides, unless the load consuming the power regenerated by the regenerative inverter exists in an AC power source system if the regenerative inverter is installed, the power reversely flows to an upstream transmission network (an electric power system of an electric power company), resulting in that a railway operator fails to obtain an effect of reducing the purchased electric energy.

On the other hand, to absorb the regenerative power of the car, a power storage facility is installed in the DC feeding system in some cases. In this case, excessive regenerative power of the regenerative car can be absorbed by the power storage facility, and energy accumulated in the power storage facility can be discharged to reduce the input energy to a transformer station for feeding. Further, installation of the power storage facility makes it possible to suppress the variation in overhead line voltage.

On the other hand, it is necessary to connect a converter for voltage conversion between a storage battery used for the power storage facility and the overhead line.

An example of a conventional technique using the converter for voltage conversion between the storage battery and the overhead line is a technique of charging and discharging the storage battery by a step-up/down chopper circuit that steps up the voltage of the power storage element and interconnects it with the feeding line. In this technique, the output of the converter and the power flowing through the feeding line become equal to each other, and a converter having a step-up/down chopper circuit equivalent to the rating output of the power storage facility becomes necessary.

This technique has a problem of unlimited current flowing to the overhead line via a reflux diode of a step-up chopper circuit when the voltage of the overhead line lowers unless the voltage of the storage battery is set to be lower than the minimum variable value of the voltage of the overhead line.

Therefore, it is necessary to set the voltage of the storage battery to a voltage lower than the lowest limit value of variation in the voltage of the overhead line, requiring a high current rating as the converter. Further, this technique causes noise from a reactor, and therefore requires taking a countermeasure for noise on an apparatus or a building where the apparatus is installed.

In contrast to the above, there is a technique of inserting a converter in series with a converter to make a bias voltage borne by the converter a constant voltage for control. In this technique, each of the converters can be reduced in size because the converter for series compensation bears the load.

### PRIOR ART DOCUMENT

### REFERENCE

Reference 1: JP-A 2001-287572

EP2700534 A1 discloses a charging apparatus including a power receiving unit that includes a rectifier, receives AC power, and converts the AC power into DC power, a power storage device that has DC power stored therein, a DC/DC converter that can execute a bidirectional power-flow control including a control of charging to the power storage device and a control of discharging from the power storage device using an output of the rectifier, and a control unit that controls operations of the power receiving unit and the DC/DC converter. In the charging apparatus, an output voltage of the rectifier is set different from an output voltage of the DC/DC converter that is applied to an output terminal of the rectifier when the power storage device is discharged.

EP1772939 A2 discloses a method for coupling an energy storage system to a variable energy supply system includes providing an energy storage system including at least one Vanadium redox battery and at least one battery charge controller. The method also includes electrically coupling the at least one battery charge controller to the variable energy supply system such that the at least one battery is configured to supply a substantially consistent energy output during fluctuating energy loads of the energy supply system.

### SUMMARY

### PROBLEMS TO BE SOLVED BY THE INVENTION

However, in the above-described conventional technique, in addition to the converter for series compensation outputting the constant voltage, a current control circuit for suppressing voltage when the voltage of the overhead line increases up to a voltage value exceeding the rating is provided connected in series with the storage battery, resulting in an increase in size of the facility because two power converters are required.

Further, in the case of this technique, it is difficult to secure safety because of the configuration that the storage battery is connected in series with a capacitor, in which the potential of the storage battery increases from the potential of a rail and therefore insulation on the storage battery side needs to be enhanced for prevention of a short circuit with grounding.

A problem to be solved by the present invention is to provide a power storage device capable of enhancing safety and improving controllability of a power storage facility while coping with load variation and voltage variation of an overhead line.

### MEANS FOR SOLVING THE PROBLEMS

A power storage device in an embodiment includes a power storage element, a variable voltage source, an interconnection reactor, a current detector, and a control circuit. The power storage element is connectable to a DC electric line having a first electrode and a second electrode and capable of being charged from the DC electric line and discharging a first DC voltage. The variable voltage source is connected in series between the first electrode of the DC electric line and a positive electrode of the power storage element and capable of generating a second DC voltage in a range of differences between output voltages of the DC electric line and the power storage element. The interconnection reactor is connected between the first electrode of the DC electric line and the variable voltage source. The current detector detects a current flowing through the interconnection reactor. The control circuit controls the variable voltage source using the current detected by the current detector to adjust a difference between output voltages of a whole circuit and the charging element. The second voltage is added to the first voltage and the added voltage is applied between the first and second electrodes while the power storage element discharges.

### BRIEF DESCRIPTION OF THE DRAWINGS

Fig. 1 is a diagram illustrating a configuration of a power storage device in a first embodiment;
Fig. 2 is a diagram illustrating a configuration of a power storage device in a second embodiment.
Fig. 3 is a diagram illustrating a configuration of a power storage device in a third embodiment.
Fig. 4 is a diagram illustrating a configuration of a power storage device in a fourth embodiment.
Fig. 5 is a diagram illustrating a configuration example of a semiconductor circuit breaker.
Fig. 6 is a diagram illustrating a first configuration example (fifth embodiment) of a control circuit of the power storage device.
Fig. 7 is a diagram illustrating a second configuration example (fifth embodiment) of the control circuit of the power storage device.

### DETAILED DESCRIPTION

Hereinafter, embodiments will be described in detail referring to the drawings.

### (First Embodiment)

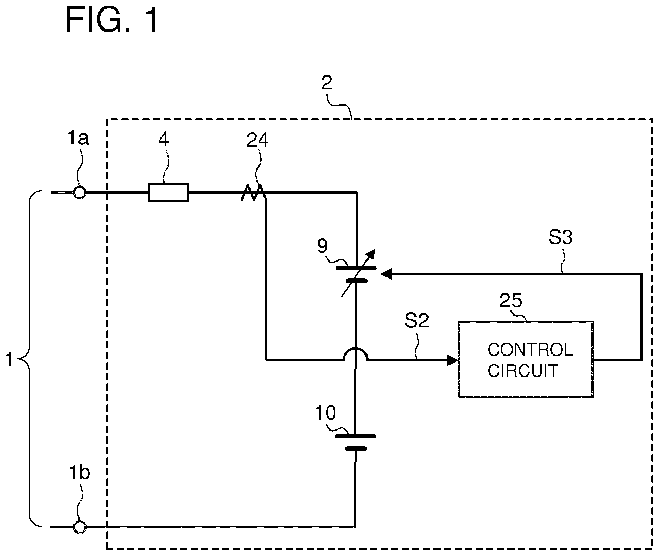

A power storage device in one embodiment will be described referring to Fig. 1.

A DC feeding system being an electric power supply system of a DC electric railroad constitutes a DC electric line 1 by an overhead line as a power transmission line, a rail, and a car (not illustrated) such as a train. In this DC electric line 1, the overhead line is an electric line at a potential on the positive electrode side and is a positive electrode 1a as a first electrode. The rail is an electric line at a potential on the negative electrode side and is a negative electrode 1b as a second electrode.

To the DC electric line 1, a diode rectifier and a car capable of regeneration (regenerative car) are connected. The regenerative car is referred to also as a car load.

As illustrated in Fig. 1, a power storage device 2 in this embodiment has a power storage element 10, a variable voltage source 9, an interconnection reactor 4, a current detector 24, a control circuit 25 and so on.

The power storage element 10 is a storage battery capable of charge from and discharge to the DC electric line 1 and having characteristics close to those of a constant voltage source, namely, a so-called battery. The power storage element 10 may be, for example, a capacitor having large electrostatic capacity, other than the storage battery.

The variable voltage source 9 is connected in series between the positive electrode 1a of the DC electric line 1 and the positive electrode of the power storage element 10. The variable voltage source 9 is an AC-DC converter that generates voltage, for example, by converting external AC voltage into DC voltage, namely, an inverter circuit. The variable voltage source 9 is of a small-size circuit configuration, capable of generating a DC voltage in a range of a difference between the DC electric line 1 and the power storage element 10.

The interconnection reactor 4 is connected to a circuit between the positive electrode 1a of the DC electric line 1 and the variable voltage source 9. The interconnection reactor 4 is a reactor (a coil made by winding an insulated wire in a spiral shape) connected in series between the DC electric line 1 and the variable voltage source 9 for interconnecting the variable voltage source 9 to the DC electric line 1, and is provided to remove the ripple contained in a current from the variable voltage source 9. The current detector 24 is connected to a circuit between the interconnection reactor 4 and the variable voltage source 9. The current detector 24 detects a current flowing through the interconnection reactor 4.

The control circuit 25 adjusts the difference between an output voltage of the whole circuit (a voltage between the positive electrode 1a and the negative electrode 1b of the DC electric line 1) and an output voltage of the power storage element 10, using the current detected by the current detector 24, thereby performing drive control of the variable voltage source 9 so that the power storage device 2 can output a desired current. The control circuit 25 performs drive control of the variable voltage source 9 so that the output voltage of the variable voltage source 9 becomes lower than the voltage of the power storage element 10.

The drive control mentioned here means changing the voltage generated by the variable voltage source 9 by controlling the variable voltage source 9. The variable voltage source 9 can generate both positive and negative voltages. Note that the detailed configuration of the variable voltage source 9 will be described in the next and subsequent embodiments.

When the voltage of the DC electric line 1 becomes higher than the voltage of the power storage element 10, the control circuit 25 performs drive control of the variable voltage source 9 to generate negative voltage. The control circuit 25 further performs drive control of the variable voltage source 9 so that the output voltage of the variable voltage source 9 becomes lower than the voltage of the power storage element 10.

In the first embodiment, when a load variation or a voltage variation occurs in the DC electric line 1, the varied load or voltage is detected as current by the current detector 24. Therefore, the control circuit 25 performs drive control of the variable voltage source 9 so as to adjust the difference between the output voltages of the DC electric line 1 and the power storage element 10 according to the current detected by the current detector 24 and thereby causes the variable voltage source 9 to generate a voltage corresponding to the variation (excess or deficiency), thus making it possible to stably supply power to the DC electric line 1.

As described above, according to the first embodiment, the small-size variable voltage source 9 capable of generating the DC voltage in a range of the difference between the DC electric line 1 and the power storage element 10 is installed in the power storage device 2, and the control circuit 25 performs drive control of the variable voltage source 9 to generate the DC voltage in the range of the difference, thereby making it possible to reduce the size of the whole power storage device 2 including the variable voltage source 9 while coping with the voltage variation or load variation of the overhead line of the DC feeding system, and to improve the controllability of a power storage facility while reducing the facility introduction cost of the power storage device.

Consequently, constituting the aforementioned power storage device 2 enables control of the current in the interconnection reactor 4 according to a current command, and reduction of the power capacity of the variable voltage source 9 because the variable voltage source 9 only needs to generate, at that time, power corresponding to the difference between the output point voltage and the output voltage of the power storage element 10.

### (Second Embodiment)

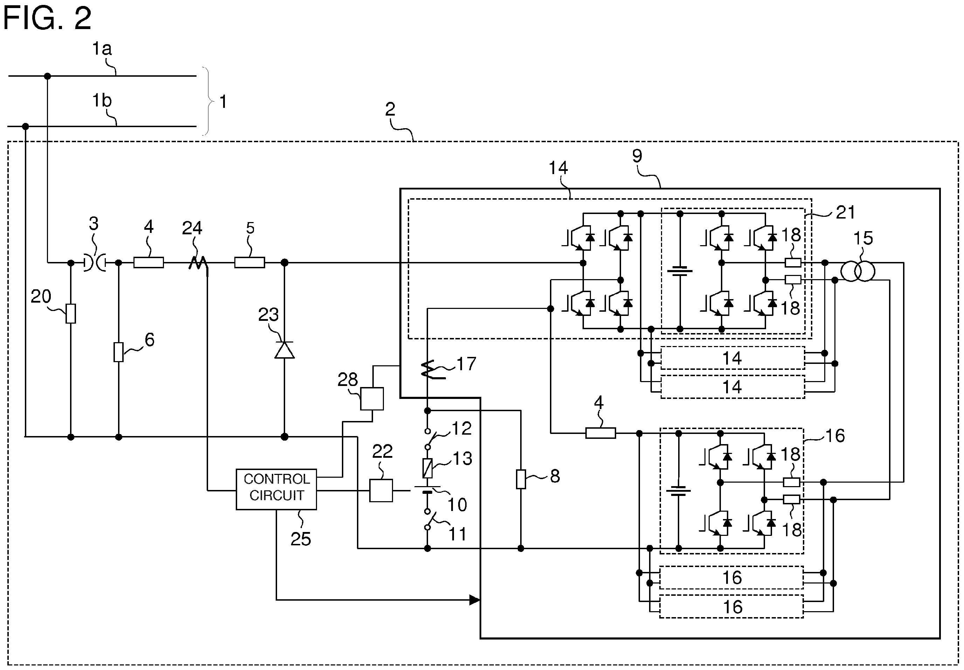

Hereinafter, second to sixth embodiments in which the first embodiment is embodied will be described referring to Fig. 2 to Fig.5. First of all, the second embodiment will be described referring to Fig. 2. Note that in the second and subsequent embodiments, the same configurations as those in the first embodiment will be denoted by the same numerals in the first embodiment, and their description will be omitted.

As illustrated in Fig. 2, the second embodiment has a first circuit breaker 3, a semiconductor circuit breaker 5, a voltage detector 6, a variable voltage source 9, a contactor 11, a second circuit breaker 12, a fuse 13, a first voltage detector 20, a power storage element state detection unit 22 as a state detection unit, a diode 23 and so on.

The first circuit breaker 3 is connected between a DC electric line 1 and a power storage element 10, and a control circuit 25 controls opening of the first circuit breaker 3 to separate the DC electric line 1 and the power storage element 10. The voltage detector 6 detects an output end voltage of a power storage device 2. The first voltage detector 20 detects a voltage on the DC electric line 1 side.

The second circuit breaker 12 is connected to a circuit between the variable voltage source 10 and the power storage element 9. The fuse 13 is connected between the second circuit breaker 12 and the voltage source 10. Note that provision of the fuse 13 is not essential but is preferable in terms of further enhancing the safety of the circuit.

The contactor 11 is connected to a negative electrode of the power storage element 10. Provision of the contactor 11 is not essential but is preferable as with the above fuse 13.

The power storage element state detection unit 22 detects the states (state of charge (SOC), temperature and so on) of the power storage element 10. The control circuit 25 performs drive control of the variable voltage source 9 according to the states of the SOC and temperature of the power storage element 10 detected by the power storage element state detection unit 22.

More specifically, when the states of the SOC and temperature of the power storage element 10 are higher than predetermined threshold values (levels at normal drive) set in advance, the generated voltage of the variable voltage source 9 is suppressed (narrowed down) in a direction to lower the SOC and temperature. The first voltage detector 20 detects the voltage of the DC electric line 1 (the voltage between the positive electrode 1a and the negative electrode 1b).

The diode 23 has a cathode end connected to a circuit between an interconnection reactor 4 and the variable voltage source 9, and an anode end connected to a circuit on a negative electrode side of the power storage element 10. In short, the diode 23 is installed between the electrodes of the power storage element 10.

Installation of the diode 23 between the electrodes of the power storage element 10 makes it possible to suppress an increase in voltage of the capacitor in a third circuit 21, and protect the circuit from overvoltage in earth fault. Besides, for example, the diodes 23 and a resistor element connected in series with the diode 23 may be connected.

The voltage detector 6 is connected between the first circuit breaker 3 and the power storage element 10, and detects a voltage on the power storage element 10 side between the first circuit breaker 3 and the power storage element 10.

The semiconductor circuit breaker 5 is connected between the positive electrode 1a of the DC electric line 1 and the variable voltage source 9, and can pass current in a positive direction (forward direction) and/or a backward direction and break the flow of the current, by control from the control circuit 25. In other words, the semiconductor circuit breaker 5 can switch among three states such as a state where the current is passed in one of the forward and backward directions, a state where the current is passed through in both directions, and a break state where the current is not passed through either of the directions.

The variable voltage source 9 includes a first current detection unit 17, a second voltage detector 8, a plurality of first circuits 14 connected to the positive electrode side of the DC electric line 1, a plurality of second circuits 16 connected in parallel to the power storage element 10, a transformer 15 and so on.

The variable voltage source 9 is connected in series with the power storage element 10, and the control circuit 25 variably controls the voltage outputted from the variable voltage source 9 to thereby control the current to be passed to the side of the DC electric line 1.

A plurality of third circuits 21 connected to the transformer 15 are provided for the first circuits 14 respectively and connected in parallel. The third circuit 21 has a switching element, a capacitor, a reactor 18 and so on.

The third circuit 21 is a single-phase full bridge circuit and, for example, an IGBT element or the like is used therefor. An element constituting the bridge circuit is not limited to the IGBT element but may be, for example, a MOSFET.

The third circuit 21 is connected to the transformer 15 via the reactor 18. The configuration of the third circuit 21 is the same as that of the second circuit 16. A full bridge circuit capable of generating negative voltage is provided in the circuit on the DC electric line 1 side of the third circuit 21.

Connecting the interconnection reactor 4 between the first circuit breaker 3 and the variable voltage source 9 here makes it possible to decrease the current rise rate (ΔI/Δt) to facilitate break of the first circuit breaker 3. Further, the interconnection reactor 4 constitutes an LC filter circuit, together with the capacitors in the third circuit 21 and the second circuit 16 to suppress harmonics.

The second voltage detector 8 detects a voltage outputted from the power storage element 10. The control circuit 25 controls charge/discharge of the power storage element 10 by changing the generated voltage of the variable voltage source 9 so that the output voltage of the power storage element 10 detected by the second voltage detector 8 reaches a predetermined threshold value of the charge/discharge voltage set or designated in advance. The control circuit 25 performs drive control of the variable voltage source 9 so that the output voltage of the variable voltage source 9 becomes lower than the voltage of the power storage element 10 detected by the second voltage detector 8.

The first current detection unit 17 detects a current flowing through the power storage element 10. The control circuit 25 adjusts the output voltage of the variable voltage source 9 according to the current detected by the first current detection unit 17 to control the current.

At the time when large current flows from the power storage element 10, the first current detection unit 17 detects the current and the control circuit 25 performs drive control of the variable voltage source 9 so as to suppress the current, thereby making it possible to prevent the fuse 13 from fusing and the second circuit breaker 12 from opening so as to steadily and safely operating the whole power storage device 2.

Further, the control circuit 25 varies the output voltage of the variable voltage source 9 to suppress the current flowing through the power storage element 10 using the temperature and SOC of the power storage element 10 detected by the power storage element state detection unit 22. More specifically, when the detected state (for example, temperature) of the power storage element 10 exceeds the predetermined threshold value, the control circuit 25 performs drive control to narrow down the generated voltage of the variable voltage source 9.

The control circuit 25 performs drive control of the variable voltage source 9 according to the SOC of the power storage element 10 detected by the power storage element state detection unit 22. More specifically, when the detected SOC of the power storage element 10 exceeds the predetermined threshold value (for example, 90%), the control circuit 25 performs drive control to narrow down the generated voltage of the variable voltage source 9.

This makes it possible to narrow down the current according to a management value of the SOC and the temperature of the power storage element 10 to protect the power storage element 10 from overtemperature (overheating).

On the other hand, a short circuit may occur in the DC electric line 1 depending on the inductance of the interconnection reactor 4 and the capacity of the power storage element 10.

It has been found that a phenomenon that the first circuit breaker 3 cannot detect overcurrent and therefore cannot break fault current occurs in the above case. Therefore, the second current detector 24 detects the time rate of change in the current flowing through the DC electric line 1 and the circuit breaker 3 is tripped to break the current.

Further, the semiconductor circuit breaker 5 may be installed to break the current flowing through the circuit connected with the semiconductor circuit breaker 5. The semiconductor circuit breaker 5 can break the current faster, and therefore suppress fault current.

A capacitor 19 may be installed between the positive electrode side on the DC electric line 1 to which the variable voltage source 9 is connected and the negative electrode side of the power storage element 10 to increase the short circuit current flowing through the first circuit breaker 3 by the current flowing from the capacitor 19 so as to automatically break the first circuit breaker 3 by the overcurrent.

Further, for overvoltage protection performed based on the voltages detected by the first voltage detector 20 and the second voltage detector 8, the semiconductor circuit breaker 5 can break the current flowing through the circuit. Further, opening/closing the mechanical circuit breakers such as the first circuit breaker 3 and the second circuit breaker 12 after the operation of the semiconductor circuit breaker 5 enables a breaking operation without breaking the current, thus offering an advantage that the electrode contact of the contactor 11 is less likely to become rough.

Further, the loss of the variable voltage source 9 increases if the switching operation of the variable voltage source 9 is performed at all times, the switching operation of the variable voltage source 9 needs to be stopped when charge/discharge is unnecessary.

However, when the operation of the variable voltage source 9 is stopped in the configuration of Fig. 2, the power storage element 10 is configured to be directly connected to the DC electric line 1, resulting in that the current flowing through the power storage element 10 cannot be controlled any longer.

In this second embodiment, since the control circuit 25 controls the variable voltage source 9 connected in series with the power storage element 10 to generate negative voltage when the voltage of the DC electric line 1 becomes lower than the voltage of the power storage element 10, the current flowing through the DC electric line 1 can be controlled by causing the variable voltage source 9 to generate the negative voltage in this second embodiment, whereas a conventional step-up chopper circuit has a problem of current flowing through the DC electric line 1 via a reflux diode of a step-up chopper without control.

Flowing of the current without control is synonymous with the impossibility of control of the current flowing through the power storage element 10, and it is possible to prevent fusing of the fuse 13 connected to the power storage element 10 and trip of the second circuit breaker 12 similarly to the above.

To prevent such an uncontrolled state in the conventional power storage facility, the voltage of the power storage element 10 needs to be set lower than the lowest voltage that can be generated in the DC electric line 1, so that the power storage element 10 has to be set to low voltage. This requires a boosting circuit of large current in order to discharge current to the DC electric line 1, and resultingly requires as a matter of course charge/discharge in a steady state with high voltage of the DC electric line 1, leading to the necessity of a high-voltage large-current circuit to increase the size of the apparatus.

Hence, in this second embodiment, use of the power storage element 10 with high voltage for charge/discharge can reduce the size of a charge/discharge circuit. In this case, it is desirable to set the ratio between the voltage of the power storage element 10 and the output voltage of the variable voltage source 9 so that the variable voltage source 9 outputs a voltage lower than the voltage of the power storage element 10 in order to reduce the size of the variable voltage source 9.

Since the semiconductor circuit breaker 5 is installed in this second embodiment, the control circuit 25 turns off the semiconductor circuit breaker 5 and thereby separates the DC electric line 1 side and the variable voltage source 9 to break the flow of the current and simultaneously performs drive control of the variable voltage source 9 to stop the drive of the variable voltage source 9, thereby stropping the switching operation of the variable voltage source 9.

As conditions of stopping the switching operation of the variable voltage source 9 are current and voltage. The control circuit 25 stops drive of the variable voltage source 9 at the time when the detected value of the current outputted from the power storage element 10 detected by the current detector 17 falls within a predetermined range, at the time when the current outputted from the power storage element 10 to the DC electric line 1 detected by the current detector 24 falls within a predetermined range, or at the time when the voltage of the power storage element 10 detected by the voltage detector 8 falls within a predetermined range.

The variable voltage source 9 is further provided with a load state detection unit 28. The load state detection unit 28 monitors the temperature of the elements constituting the variable voltage source 9 and the current and voltage outputted from the variable voltage source 9 and determines its load state (operating state). Information on the load state is outputted to the control circuit 25. The control circuit 25 performs drive control so that the voltage outputted from the variable voltage source 9 is changed according to the predetermined threshold value of the load state.

When the time change rates of the current detected by the current detectors 17, 24 exceed predetermined values, the control circuit 25 turns off at least one of the semiconductor circuit breaker 5 and the circuit breaker 3.

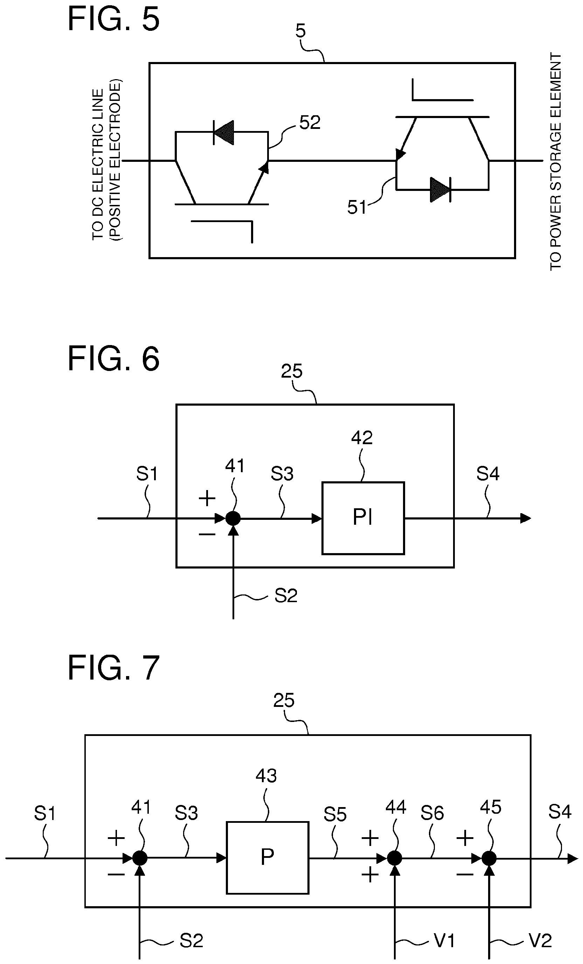

The semiconductor circuit breaker 5 is further configured such that two semiconductor switches (a semiconductor switch 51 and a semiconductor switch 52) are oppositely connected as illustrated in Fig. 5 to constitute a function of controlling the current to one direction, both directions, and break, so that the control circuit 25 switches an element to be operated according to the directions of charging current and discharging current of the power storage element 10.

In this case, for example, at the time of charging, the semiconductor switch 52 is turned on and the semiconductor switch 51 is turned off. Conversely, at the time of discharging, the semiconductor switch 51 is turned on and the semiconductor switch 52 is turned off. By causing the semiconductor switches 51, 52 to perform such operations, the charging current flows through the power storage element 10 when the voltage of the DC electric line 1 is higher than the voltage on the variable voltage source 9 side of the semiconductor circuit breaker 5, namely, the voltage obtained by adding the voltage of the variable voltage source 9 to the voltage of the power storage element 10, for example, at the time of charging.

Besides, when the voltage of the DC electric line 1 becomes lower, the charging current is reversely blocked by the diode of the semiconductor switch 51 and does not flow any longer.

Similarly, at the time of discharging, the control circuit 25 makes the voltage on the power storage element 10 side higher than the voltage of the DC electric line 1 by drive control of the variable voltage source 9 to discharge energy accumulated in the power storage element 10 to the DC electric line 1. In this event, the semiconductor switch 51 is turned on and the semiconductor switch 52 is turned off by the control circuit 25. Thus, the current from the power storage device 2 flows through the DC electric line 1.

Conversely, when the voltage of the DC electric line 1 becomes higher than the voltage of the power storage device 2, the discharging current is blocked by the diode of the semiconductor switch 52 and does not flow any longer. In this manner, the semiconductor circuit breaker 5 is used for controlling charge/discharge.

On the other hand, when a short circuit of the DC electric line 1 occurs, the voltage of the capacitor in the third circuit 21 sometimes increases to generate overvoltage. Occurrence of the overvoltage causes element breakdown to make it impossible to continue the operation by restart thereafter.

Therefore, in this embodiment, the diode 23 is installed to suppress the increase in voltage of the capacitor in the third circuit 21, thereby enabling application of a low-withstand voltage switching element to the third circuit 21 to reduce the switching loss of the variable voltage source 9, and enabling increase of the switching frequency to reduce the size of the transformer 15. It also becomes possible to suppress noise by high-frequency switching.

Note that a circuit configuration in which a load such as a resistor is connected in series with the diode 23 may be employed to consume the energy accumulated in the interconnection reactor 4 by the resistor.

In this circuit configuration, an IGBT element or a MOSFET may be applicable as the switching element of the variable voltage source 9, and an SiC device may be used to reduce the loss and reduce the size of an isolating transformer.

In the case of using the SiC device, if a module having an SiC element (chip) with large area through which large current can flow is employed, the module becomes expensive because the SiC element itself is poor in yield.

For this reason, a plurality of SiC elements with small area and high yield, namely, SiC modules with small current capacity are connected in parallel to secure the current capacity, thereby realizing a variable voltage source 9 inexpensive and smaller in size than the conventional step-up chopper circuit using the IGBT element.

The control function of the control circuit 25 will be described here. The control circuit 25 outputs a command for charge/discharge to the variable voltage source 9 based on the states of the power storage element 10 (the temperature and SOC of the power storage element) and on the voltage of the DC electric line 1 to thereby perform voltage control and current control of the variable voltage source 9.

The control circuit 25 gives a command for voltage which the power storage element 10 should output, according to the state, for example, the SOC of the power storage element 10. As for the voltage command, voltage commands which are different for discharge and charge may be continuously given at the same time. Note that the control circuit 25 may control the current or power which the power storage element 10 should output, based on the voltage of the DC electric line 1 and the SOC of the power storage element 10.

Note that the control circuit 25 is installed outside the variable voltage source 9 in the example in Fig. 2 and may be installed inside the variable voltage source 9, and the function of the control circuit 25 may be divided to a charge/discharge command unit and a converter control unit so that the charge/discharge command unit may be installed outside the variable voltage source 9 and the converter control unit may be installed inside the variable voltage source 9.

Further, the control circuit 25 may give a control command of narrowing down the current of the power storage element 10. This is a narrowing signal for suppressing the current flowing through the power storage element 10 when the temperature of the power storage element 10 increases beyond or decreases below a predetermined range. This enables use of the power storage element 10 without excessive deterioration.

Further, when the outputted current or power or the voltage outputted from the power storage element 10 becomes a magnitude in the predetermined range, drive (switching operation) of the variable voltage source 9 is stopped to suppress the loss of the variable voltage source 9, thereby making it possible to form a separately provided cooler (not illustrated) into the one with low radiation capacity for reduction in size.

Note that the circuit constituted of the second circuit 16, the third circuit 21, and the transformer 15 in this embodiment may be constituted using an LC resonance circuit composed of a reactor L and a capacitor C which are publicly-known technique.

As described above, according to the second embodiment, the variable voltage source 9 only needs to generate power (output the charge/discharge power) corresponding to the output voltage of the variable voltage source 9 to be added to the voltage of the power storage element 10 (the voltage of a difference between the voltage of the DC electric line 1 and the voltage of the power storage element 10), a variable voltage source 9 with low rating can be used, and a charge/discharge circuit reduced in size as compared with that in a standard step-up chopper mode can be constituted.

In other words, the variable voltage source 9 such as an inverter required for charge/discharge of the power storage element 10 can be reduced in size and the noise of the power storage element 10 can be reduced, and the operation continuity required as the power storage source facility can be maintained even after an earth fault accident on the DC feeding side.

Consequently, introduction of the small-size power storage device enables enhancement of safety and improvement in controllability of the power storage facility while coping with the load variation and the voltage variation of the overhead line.

### (Third Embodiment)

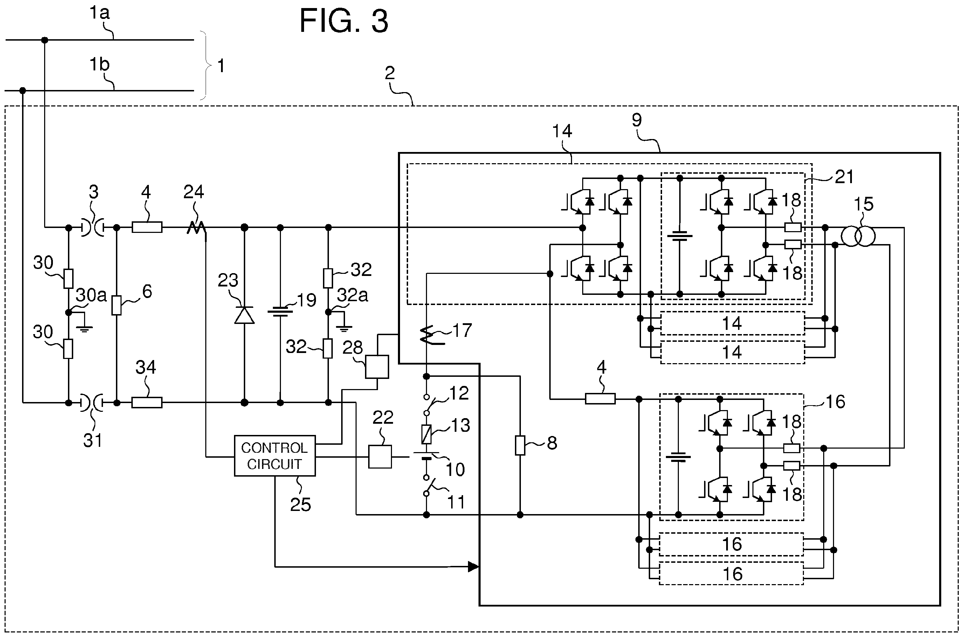

A third embodiment will be described referring to Fig. 3. The third embodiment is a configuration to cope with the case where the potential on the negative electrode side of a DC electric line 1 is lower than the ground voltage. More specifically, the third embodiment is the case where the potential on an electric line 1b on the negative electrode side of the DC electric line 1 is lower than the ground potential in a circuit illustrated in Fig. 3.

As illustrated in Fig. 3, the third embodiment includes a capacitor 19, a voltage detector 30, a third circuit breaker 31, a voltage-dividing resistor 32, and a reactor 34.

The capacitor 19 is installed between electrodes of a power storage element 10 as with a diode 23. The capacitor 19 has one end connected to a circuit between an interconnection reactor 4 and a variable voltage source 9 and another end connected to a circuit on the negative electrode side of the power storage element 10. Further, the capacitor 19 is connected between the electrodes of the power storage element 10 to constitute an LC filter, together with the interconnection reactor 4 to thereby suppress harmonics.

In particular, the harmonics generated on the power storage element 10 side by a second circuit 16 possibly flow through a fuse 13 and deteriorate the fuse 13. Therefore, the LC filter is constituted as in the third embodiment to suppress a harmonic current, thereby preventing fusing of the fuse 13.

Normally, when the harmonic current flows, a fuse 13 with high rating needs to be used in order to prevent blowing of the fuse 13 and extend the life of the fuse 13. Constituting the LC filter as described above to suppress the harmonics enables use of a fuse 13 with low rating, thus contributing to the reduction in size and cost of the apparatus.

Two voltage detectors 30 are provided between a positive electrode 1a and the negative electrode 1b of the DC electric line 1, and a grounding point 30a is provided between the voltage detectors 30. Note that the voltage detectors 30 are for detecting the potentials of the electrodes from the grounding point 30a respectively, and the potential between the positive electrode and the negative electrode of the DC electric line 1 may be directly measured without grounding.

The voltage-dividing resistor 32 divides the output voltage of the power storage device 2 and its voltage division point 32a is grounded. The third circuit breaker 31 is connected to the negative electrode side of the DC electric line 1. The reactor 34 is connected to a circuit between the negative electrode side of the DC electric line 1 and the negative electrode side of the power storage element 10. This reactor 34 is the same as the interconnection reactor 4 installed on the positive electrode side.

In the third embodiment, when the potential on the negative electrode side of the DC electric line 1 is lower than the ground voltage, the voltage detectors 30 detect the voltages divided by the voltage-dividing resistor 32 and notify a control circuit 25 of the voltages, and the control circuit 25 controls the third circuit breaker 31 to break the circuit on the negative electrode side of the DC electric line 1, thereby normally breaking the circuit when overcurrent flows.

The control circuit 25 turns off the third circuit breaker 31 when the time change rates of currents detected by current detectors 17, 24 exceed predetermined values.

According to this third embodiment, it is possible to cope with the case where the potential on the negative electrode side of the DC electric line 1 is lower than the ground voltage, without using the semiconductor circuit breaker.

Note that the circuit constituted of the second circuit 16, a third circuit 21, and a transformer 15 in this embodiment may be constituted using an LC resonance circuit composed of a reactor L and a capacitor C which are publicly-known technique.

### (Fourth Embodiment)

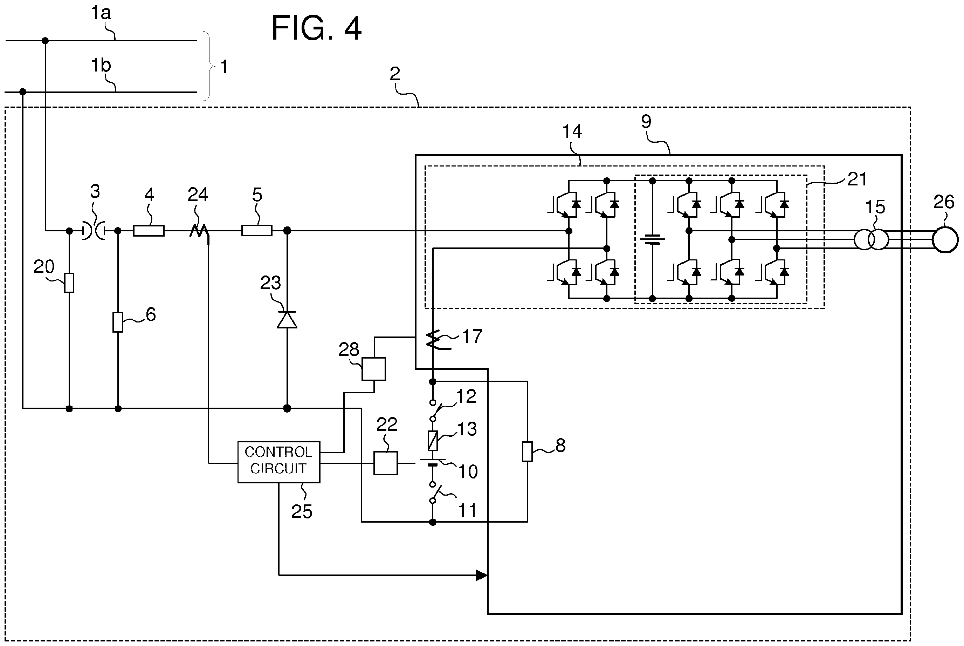

A fourth embodiment will be described referring to Fig. 4. The fourth embodiment includes a second power source 26. The second power source 26 is connected to a third circuit 21 via a transformer 15. In this case, supply of power from the second power source 26 to a variable voltage source 9 so that the variable voltage source 9 generates power to be inputted/outputted to/from a DC electric line 1 side.

The third circuit 21 is a three-phase inverter circuit, and the transformer 15 and the second power source 26 are also three-phase ones. Use of not single-phase ones but three-phase ones as described above enables suppression of the ripple of a capacitor inside the third circuit 21. This makes it possible to increase the DC voltage which a variable voltage source 9 can output to the DC electric line 1 side while reducing the capacity of the capacitor, thus realizing a small-size circuit.

Further, the third circuit 21 used in this example is a circuit capable of inverse conversion, and can increase the maximum regeneration capability because the regenerative power to an AC power source is added to the input power to a power storage device 2 as the regenerative power from the DC electric line 1 to the power storage device 2. This can contribute to a reduction in size of the apparatus in the application in which the apparatus rating is decided depending on the magnitude of the regenerative power.

According to the fourth embodiment, taking the power to be supplied to the variable voltage source 9 generating the DC voltage as three-phase AC from the external second power source 26 contributes to a reduction in size of the apparatus in the application in which the apparatus rating is decided depending on the magnitude of the regenerative power.

### (Fifth Embodiment)

The control circuit 25 performs drive control of the variable voltage source 9 according to the current detected by the current detector 24 in the circuit configuration of the power storage device 2 illustrated in Fig. 1, and may perform drive control of the variable voltage source 9 in consideration of also elements other than the current. Its examples will be described below.

The control circuit 25 in a first example has a subtractor 41 and a proportional integral controller 42 (hereinafter, referred to as a "PI controller 42") as illustrated in Fig. 6.

The subtractor 41 takes a difference between a current command S1 inputted from a higher system (not illustrated) or the like and a detected current S2 detected by the current detector 24, and outputs a current deviation signal S3 to the PI 42.

Note that what is inputted from the higher system to the control circuit 25 is not the current command S1 but a power command in some cases, and in this case the power command is converted to the current command S1 by dividing the power command by the voltage at an output point.

The PI controller 42 generates a variable voltage command S4 using the inputted current deviation signal S3, and outputs the variable voltage command S4 to the variable voltage source 9. Note that the proportional integral controller 42 is used here, but a proportional integral differential controller (PID controller) may be used.

The control circuit 25 in a second example has a subtractor 41, a proportioning controller 43 (hereinafter, referred to as a "P controller 43"), an adder 44, and a subtractor 45 as illustrated in Fig. 7.

The subtractor 41 takes a difference between a current command S1 inputted from a higher system (not illustrated) or the like and a detected current S2 detected by the current detector 24, and outputs a current deviation signal S3 to the P controller 43.

The P controller 43 multiplies the inputted current deviation signal S3 by a preset gain to generate a current deviation signal S5, and outputs the current deviation signal S5 to the adder 44.

The adder 44 adds the inputted current deviation signal S5 and the output voltage of the whole power storage device 2 (hereinafter, referred to as an "output point voltage V1") detected by the voltage detector 6 to generate a first signal S6, and outputs the first signal S6 to the subtractor 45.

The subtractor 45 takes a difference between the inputted first signal S6 and an output voltage V2 of the power storage element 10 detected by the second voltage detector 8 to generate a variable voltage command S4, and outputs the variable voltage command S4 to the variable voltage source 9.

According to the fifth embodiment, the control circuit 25 is configured as described above to perform drive control of the variable voltage source 9 in consideration of not only the current flowing through the interconnection reactor 4 but also the current command S1 from the higher system, the output point voltage V1, and the output voltage V2 of the power storage device 10, and can thereby control the variable voltage source 9 with higher accuracy. Further, it is possible to overcome the instability of the circuit output occurring in an initial operation.

Note that the configuration of the control circuit 25 in this fifth embodiment is applicable not only to the first embodiment but also to the other second to fourth embodiments.

### (Sixth Embodiment)

It is assumed that the DC electric line 1 is, for example, a feeder line and a rail of a DC electric railroad in each of the embodiments illustrated in Fig. 1 to Fig. 4, and the DC electric line 1 of the DC electric railroad is not limited only to such a configuration but is also configured such that a return current does not flow through the rail but flows through a rail dedicated to a return line, which is provided separately from the rail, in some cases. Other than the above, the DC electric line 1 may be a DC bus in which, for example, a plurality of solar power generation elements are connected in parallel, and the DC electric line 1 includes their lines.

Each of the embodiments illustrated in Fig. 1 to Fig. 4 is an example in which the negative electrode of the power storage element 10 is connected to the negative electrode 1b side of the DC electric line 1, but the positive electrode side of the power storage element 10 may be connected to the positive electrode side of the DC electric line 1 and the negative electrode side of the variable voltage source 9 may be connected to the negative electrode side of the DC electric line 1.

In this case, the withstand voltage between the terminal of the element used for the variable voltage source 9 and the ground can be decreased. Besides, when the withstand voltage between the terminal of the element and the ground cannot stand, each cooling fin for cooling the element needs to be insulated to float the potential from the ground. Bringing the potential on the variable voltage source 9 side closer to the ground potential eliminates the need to float the cooling fin, thereby reducing the size of the variable voltage source 9 including the cooling fin.

According to this sixth embodiment, it is possible to decrease the withstand voltage between the terminal of the element used for the variable voltage source 9 and the ground by connecting the positive electrode side of the power storage element 10 to the positive electrode side of the DC electric line 1 and connecting the negative electrode side of the variable voltage source 9 to the negative electrode side of the DC electric line 1.

According to at least one of the above-described embodiments, it is possible to realize the power storage device 2 capable of reducing the size and noise of the facility for interconnecting the power storage element 10 and the DC electric line 1 and continuing the operation even after occurrence of an earth fault of the DC electric line 1.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made as long as they fall within the scope of the accompanying claims. Note that the above-described power storage device may be used installed on (connected to) a DC power transmission line of a solar power generation system such as a mega solar system.

### EXPLANATION OF REFERENCE SIGNS

1 ... DC electric line, 1a ... positive electrode, 1b ... negative electrode, 1b ... electric line, 2 ... power storage device, 3 ... first circuit breaker, 4 ... interconnection reactor, 5 ... semiconductor circuit breaker, 6 ... voltage detector, 8 ... second voltage detector, 9 ... variable voltage source, 10 ... power storage element, 11 ... contactor, 12 ... second circuit breaker, 13 ... fuse, 14 ... first circuit, 15 ... transformer, 16 ... second circuit, 17 ... current detection unit, 17 ... capacitor, 18 ... reactor, 19 ... capacitor, 20 ... voltage detector, 21 ... third circuit, 22 ... power storage element state detection unit, 23 ... diode, 24 ... second current detector, 25 ... control circuit, 26 ... second power source, 30 ... first voltage detector, 30a ... grounding point, 31 ... third circuit breaker, 32 ... voltage-dividing resistor, 34 ... reactor, 41 ... subtractor, 42 ... proportional integral controller (PI controller), 43 ... proportional controller (P controller), 44... adder, 45 ... subtractor, 51, 52 ... semiconductor switch.

## Claims

1. A power storage device comprising:
a power storage element (10) connectable to a DC electric (1) having a first electrode (1a) and a second electrode (1b) and capable of being charged from the DC electric line and discharging a first DC voltage;
**characterized in that** the power storage device further comprises:
a variable voltage source (9) connected in series between the first electrode of the DC electric line and a positive electrode of the power storage element and capable of generating a second DC voltage in a range of differences between output voltages of the DC electric line and the power storage element;
an interconnection reactor (4) connected between the first electrode of the DC electric line and the variable voltage source;
a current detector (24) configured to detect a current flowing through the interconnection reactor; and
a control circuit (25) configured to control the variable voltage source using the current detected by the current detector to adjust a difference between output voltages of a whole circuit and the power storage element,
wherein the second voltage is added to the first voltage and the added voltage is applied between the first and second electrodes while the power storage element discharges.

2. The power storage device according to claim 1, further comprising:
a load state detection unit configured to monitor a load state of the variable voltage source, wherein
the control circuit controls the variable voltage source according to the load state of the variable voltage source detected by the load state detection unit.

3. The power storage device according to claim 1 or 2, wherein
the control circuit controls the variable voltage source such that a current flowing through the power storage element becomes a constant value or less.

4. The power storage device according to any one of claims 1 to 3, wherein
the control circuit controls such that the variable voltage source generates a negative voltage when voltage of the DC electric line becomes higher than voltage of the power storage element.

5. The power storage device according to any one of claims 1 to 4, wherein
the control circuit controls such that the output voltage of the variable voltage source becomes lower than the voltage of the power storage element.

6. The power storage device according to any one of claims 1 to 5, wherein
the control circuit controls the variable voltage source to suppress current flowing through the power storage element when a detected state of the power storage element exceeds a predetermined threshold.

7. The power storage device according to any one of claims 1 to 6, wherein
the control circuit receives a power command from a higher system, and changes voltage generated by the variable voltage source based on the power command to control charge/discharge of the power storage element.

8. The power storage device according to any one of claims 1 to 7, wherein
the control circuit outputs a charge/discharge command to the variable voltage source based on a state of the power storage element and the voltage of the DC electric line, to control such that output voltages of the power storage element and the variable voltage source correspond to the charge/discharge command.

9. The power storage device according to any one of claims 1 to 8, wherein
the control circuit controls the charge and discharge of the variable voltage source according to the voltage of the DC electric line, and changes a voltage threshold of the DC electric line at which the power storage device starts the charge and a voltage threshold of the DC electric line at which the power storage device starts the discharge, according to a detected state of charge of the power storage element.

10. The power storage device according to any one of claims 1 to 9, wherein
the control circuit stops the variable voltage source at a time when a detected value of a current outputted from the power storage element detected by the current detector falls within a predetermined range, at a time when a current outputted from the power storage element and the variable voltage source to the DC electric line detected by the current detection unit falls within a predetermined range, or at a time when the voltage of the power storage element falls within a predetermined range.

11. The power storage device according to any one of claims 1 to 10, wherein
the control circuit controls the variable voltage source according to a detected temperature of the power storage element.

12. The power storage device according to any one of claims 1 to 11, further comprising:
a semiconductor circuit breaker connected between the first electrode of the DC electric line and the variable voltage source and capable of being controlled by the control circuit to pass current in a forward direction or a backward direction and break the flow of the current.

13. The power storage device according to claim 12, wherein
the control circuit turns off the semiconductor circuit breaker when the output voltage of the whole circuit exceeds a predetermined threshold.

14. The power storage device according to claim 12 or 13, wherein
the control circuit turns off the semiconductor circuit breaker when a time rate of change in the current detected by the current detection unit exceeds a predetermined threshold.

15. The power storage device according to any one of claims 1 to 14, further comprising:
a diode having a cathode end connected to a circuit between the interconnection reactor and the variable voltage source and an anode end connected to a circuit on the negative electrode side of the power storage element, or the diode and a resistor connected in series with the diode.

## Patentansprüche

1. Stromspeichervorrichtung, die umfasst:
ein Stromspeicherelement (10), das mit einer elektrischen Gleichstromleitung (1) verbindbar ist, die eine erste Elektrode (1a) und eine zweite Elektrode (1b) aufweist, und in der Lage ist, von der elektrischen Gleichstromleitung geladen zu werden, und eine erste Gleichspannung entlädt;
**dadurch gekennzeichnet, dass** die Stromspeichervorrichtung ferner umfasst:
eine variable Spannungsquelle (9), die zwischen der ersten Elektrode der elektrischen Gleichstromleitung und einer positiven Elektrode des Stromspeicherelements in Reihe geschaltet ist und in der Lage ist, eine zweite Gleichspannung in einem Bereich von Differenzen zwischen Ausgangsspannungen der elektrischen Gleichstromleitung und des Stromspeicherelements zu erzeugen;
eine Verbindungsdrossel (4), die zwischen der ersten Elektrode der elektrischen Gleichstromleitung und der variablen Spannungsquelle verbunden ist;
einen Stromdetektor (24), der ausgestaltet ist, um einen Strom zu detektieren, der durch die Verbindungsdrossel fließt; und
eine Steuerschaltung (25), die ausgestaltet ist, um die variable Spannungsquelle unter Verwendung des durch den Stromdetektor detektierten Stroms zu steuern, um eine Differenz zwischen Ausgangsspannungen einer gesamten Schaltung und des Stromspeicherelements anzupassen,
wobei die zweite Spannung zu der ersten Spannung addiert wird und die addierte Spannung zwischen der ersten und der zweiten Elektrode angelegt wird, während das Stromspeicherelement entladen wird.

2. Stromspeichervorrichtung nach Anspruch 1, die ferner umfasst:
eine Ladezustand-Detektionseinheit, die ausgestaltet ist, um einen Ladezustand der variablen Spannungsquelle zu überwachen, wobei
die Steuerschaltung die variable Spannungsquelle gemäß dem durch die Ladezustand-Detektionseinheit detektierten Ladezustand der variablen Spannungsquelle steuert.

3. Stromspeichervorrichtung nach Anspruch 1 oder 2, wobei
die Steuerschaltung die variable Spannungsquelle derart steuert, dass ein Strom, der durch das Stromspeicherelement fließt, ein konstanter Wert oder niedriger wird.

4. Stromspeichervorrichtung nach einem der Ansprüche 1 bis 3, wobei
die Steuerschaltung derart steuert, dass die variable Spannungsquelle eine negative Spannung erzeugt, wenn Spannung von der elektrischen Gleichstromleitung höher als Spannung des Stromspeicherelements wird.

5. Stromspeichervorrichtung nach einem der Ansprüche 1 bis 4, wobei
die Steuerschaltung derart steuert, dass die Ausgangsspannung der variablen Spannungsquelle niedriger als die Spannung des Stromspeicherelements wird.

6. Stromspeichervorrichtung nach einem der Ansprüche 1 bis 5, wobei
die Steuerschaltung die variable Spannungsquelle steuert, um Strom zu unterdrücken, der durch das Stromspeicherelement fließt, wenn ein detektierter Zustand des Stromspeicherelements einen vorbestimmten Schwellenwert überschreitet.

7. Stromspeichervorrichtung nach einem der Ansprüche 1 bis 6, wobei
die Steuerschaltung einen Strombefehl von einem höheren System empfängt, und durch die variable Spannungsquelle erzeugte Spannung basierend auf dem Strombefehl ändert, um das Laden/Entladen des Stromspeicherelements zu steuern.

8. Stromspeichervorrichtung nach einem der Ansprüche 1 bis 7, wobei
die Steuerschaltung einen Lade/Entladebefehl an die variable Spannungsquelle basierend auf einem Zustand des Stromspeicherelements und der Spannung der elektrischen Gleichstromleitung ausgibt, um derart zu steuern, dass Ausgangsspannungen des Stromspeicherelements und der variablen Spannungsquelle dem Lade/Entladebefehl entsprechen.

9. Stromspeichervorrichtung nach einem der Ansprüche 1 bis 8, wobei
die Steuerschaltung das Laden und Entladen der variablen Spannungsquelle gemäß der Spannung der elektrischen Gleichstromleitung steuert und einen Spannungsschwellenwert der elektrischen Gleichstromleitung, bei dem die Stromspeichervorrichtung das Laden beginnt, und einen Spannungsschwellenwert der elektrischen Gleichstromleitung, bei dem die Stromspeichervorrichtung das Entladen beginnt, gemäß einem detektierten Ladezustand des Stromspeicherelements ändert.

10. Stromspeichervorrichtung nach einem der Ansprüche 1 bis 9, wobei
die Steuerschaltung die variable Spannungsquelle an einem Zeitpunkt, an dem ein detektierter Wert eines von dem Stromspeicherelement ausgegebenen Stroms, der durch den Stromdetektor detektiert wird, in einen vorbestimmten Bereich fällt, an einem Zeitpunkt, an dem ein von dem Stromspeicherelement und der variablen Spannungsquelle an die elektrische Gleichstromleitung ausgegebener Strom, der durch die Stromdetektionseinheit detektiert wird, in einen vorbestimmten Bereich fällt, oder an einem Zeitpunkt anhält, an dem die Spannung des Stromspeicherelements in einen vorbestimmten Bereich fällt.

11. Stromspeichervorrichtung nach einem der Ansprüche 1 bis 10, wobei
die Steuerschaltung die variable Spannungsquelle gemäß einer detektierten Temperatur des Stromspeicherelements steuert.

12. Stromspeichervorrichtung nach einem der Ansprüche 1 bis 11, die ferner umfasst:
einen Halbleiterunterbrecher, der zwischen der ersten Elektrode der elektrischen Gleichstromleitung und der variablen Spannungsquelle verbunden ist und in der Lage ist, durch die Steuerschaltung gesteuert zu werden, um Strom in eine Vorwärtsrichtung oder eine Rückwärtsrichtung durchzulassen und das Fließen des Stroms zu unterbrechen.

13. Stromspeichervorrichtung nach Anspruch 12, wobei
die Steuerschaltung den Halbleiterunterbrecher ausschaltet, wenn die Ausgangsspannung der gesamten Schaltung einen vorbestimmten Schwellenwert überschreitet.

14. Stromspeichervorrichtung nach Anspruch 12 oder 13, wobei
die Steuerschaltung den Halbleiterunterbrecher ausschaltet, wenn eine zeitliche Änderungsrate in dem durch die Stromdetektionseinheit detektierten Strom einen vorbestimmten Schwellenwert überschreitet.

15. Stromspeichervorrichtung nach einem der Ansprüche 1 bis 14, die ferner umfasst:
eine Diode, die ein Kathodenende, das mit einer Schaltung zwischen der Verbindungsdrossel und der variablen Spannungsquelle verbunden ist, und ein Anodenende, das mit einer Schaltung an der negativen Elektrodenseite des Stromspeicherelements verbunden ist, oder die Diode und einen mit der Diode in Reihe geschalteten Widerstand aufweist.

## Revendications

1. Dispositif accumulateur d'énergie comprenant :
un élément accumulateur d'énergie (10) pouvant être raccordé à une ligne électrique CC (1) ayant une première électrode (1a) et une deuxième électrode (1b) et capable d'être chargé depuis la ligne électrique CC et déchargeant une première tension CC ;
**caractérisé en ce que** le dispositif accumulateur d'énergie comprend en outre :
une source de tension variable (9) raccordée en série entre la première électrode de la ligne électrique CC et une électrode positive de l'élément accumulateur d'énergie et capable de générer une deuxième tension CC dans une plage de différences entre des tensions de sortie de la ligne électrique CC et de l'élément accumulateur d'énergie ;
un réacteur d'interconnexion (4) raccordé entre la première électrode de la ligne électrique CC et la source de tension variable ;
un détecteur de courant (24) configuré pour détecter un courant s'écoulant à travers le réacteur d'interconnexion ; et
un circuit de commande (25) configuré pour commander la source de tension variable en utilisant le courant détecté par le détecteur de courant pour ajuster une différence entre des tensions de sortie d'un circuit complet et l'élément accumulateur d'énergie,
dans lequel la deuxième tension est ajoutée à la première tension et la tension ajoutée est appliquée entre les première et deuxième électrodes pendant que l'élément accumulateur d'énergie se décharge.

2. Dispositif accumulateur d'énergie selon la revendication 1, comprenant en outre :
une unité de détection d'état de charge configurée pour surveiller un état de charge de la source de tension variable, dans lequel
le circuit de commande commande la source de tension variable en fonction de l'état de charge de la source de tension variable détecté par l'unité de détection d'état de charge.

3. Dispositif accumulateur d'énergie selon la revendication 1 ou 2, dans lequel
le circuit de commande commande la source de tension variable de sorte qu'un courant s'écoulant à travers l'élément accumulateur d'énergie devienne inférieur ou égal à une valeur constante.

4. Dispositif accumulateur d'énergie selon l'une quelconque des revendications 1 à 3, dans lequel
le circuit de commande commande de sorte que la source de tension variable génère une tension négative lorsqu'une tension de la ligne électrique CC devient supérieure à une tension de l'élément accumulateur d'énergie.

5. Dispositif accumulateur d'énergie selon l'une quelconque des revendications 1 à 4, dans lequel
le circuit de commande commande de sorte que la tension de sortie de la source de tension variable devienne inférieure à la tension de l'élément accumulateur d'énergie.

6. Dispositif accumulateur d'énergie selon l'une quelconque des revendications 1 à 5, dans lequel
le circuit de commande commande la source de tension variable pour supprimer un courant s'écoulant à travers l'élément accumulateur d'énergie lorsqu'un état détecté de l'élément accumulateur d'énergie dépasse un seuil prédéterminé.

7. Dispositif accumulateur d'énergie selon l'une quelconque des revendications 1 à 6, dans lequel
le circuit de commande reçoit une commande d'énergie en provenance d'un système supérieur, et change une tension générée par la source de tension variable sur la base de la commande d'énergie pour commander une charge/décharge de l'élément accumulateur d'énergie.

8. Dispositif accumulateur d'énergie selon l'une quelconque des revendications 1 à 7, dans lequel
le circuit de commande délivre une commande de charge/décharge à la source de tension variable sur la base d'un état de l'élément accumulateur d'énergie et de la tension de la ligne électrique CC, pour commander de sorte que des tensions de sortie de l'élément accumulateur d'énergie et de la source de tension variable correspondent à la commande de charge/décharge.

9. Dispositif accumulateur d'énergie selon l'une quelconque des revendications 1 à 8, dans lequel
le circuit de commande commande la charge et la décharge de la source de tension variable en fonction de la tension de la ligne électrique CC, et change un seuil de tension de la ligne électrique CC auquel le dispositif accumulateur d'énergie commence la charge et un seuil de tension de la ligne électrique CC auquel le dispositif accumulateur d'énergie commence la décharge, en fonction d'un état de charge détecté de l'élément accumulateur d'énergie.

10. Dispositif accumulateur d'énergie selon l'une quelconque des revendications 1 à 9, dans lequel
le circuit de commande arrête la source de tension variable à un temps auquel une valeur détectée d'un courant délivré depuis l'élément accumulateur d'énergie détecté par le détecteur de courant tombe à l'intérieur d'une plage prédéterminée, à un temps auquel un courant délivré depuis l'élément accumulateur d'énergie et la source de tension variable à la ligne électrique CC détecté par l'unité de détection de courant tombe à l'intérieur d'une plage prédéterminée, ou à un temps auquel la tension de l'élément accumulateur d'énergie tombe à l'intérieur d'une plage prédéterminée.

11. Dispositif accumulateur d'énergie selon l'une quelconque des revendications 1 à 10, dans lequel
le circuit de commande commande la source de tension variable en fonction d'une température détectée de l'élément accumulateur d'énergie.

12. Dispositif accumulateur d'énergie selon l'une quelconque des revendications 1 à 11, comprenant en outre :
un disjoncteur à semi-conducteur raccordé entre la première électrode de la ligne électrique CC et la source de tension variable et capable d'être commandé par le circuit de commande pour faire passer un courant dans un sens vers l'avant ou dans un sens vers l'arrière et couper le flux du courant.

13. Dispositif accumulateur d'énergie selon la revendication 12, dans lequel
le circuit de commande désactive le disjoncteur à semi-conducteur lorsque la tension de sortie du circuit complet dépasse un seuil prédéterminé.

14. Dispositif accumulateur d'énergie selon la revendication 12 ou 13, dans lequel
le circuit de commande désactive le disjoncteur à semi-conducteur lorsqu'un taux de changement dans le temps du courant détecté par l'unité de détection de courant dépasse un seuil prédéterminé.

15. Dispositif accumulateur d'énergie selon l'une quelconque des revendications 1 à 14, comprenant en outre :
une diode ayant une extrémité de cathode raccordée à un circuit entre le réacteur d'interconnexion et la source de tension variable et une extrémité d'anode raccordée à un circuit sur le côté d'électrode négative de l'élément accumulateur d'énergie, ou la diode et une résistance raccordée en série à la diode.
